Europäisches Patentamt

European Patent Office

Office européen des brevets

(19)

(11) **EP 1 296 128 A1**

(12) **EUROPÄISCHE PATENTANMELDUNG**

(43) Veröffentlichungstag:
26.03.2003 Patentblatt 2003/13

(51) Int Cl.⁷: **G01N 11/16**, G08C 19/16

(21) Anmeldenummer: **01125775.5**

(22) Anmeldetag: **29.10.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **21.09.2001 EP 01122843**

(71) Anmelder: **Endress + Hauser Flowtec AG**
**CH-4153 Reinach BL 1 (CH)**

(72) Erfinder:
• **Drahm, Wolfgang, Dr.**
**83424 Freising (DE)**

• **Matt, Christian**
**4147 Aesch, BL (CH)**
• **Rieder, Alfred, Dr.**
**84032 Landshut (DE)**

(74) Vertreter: **Andres, Angelika**
**Endress + Hauser (Deutschland) Holding GmbH,**
**PatServe,**
**Patent Abteilung,**
**Colmarer Strasse 6**
**79576 Weil am Rhein (DE)**

(54) **Viskositäts-Messgerät**

(57)      Das Viskositäts-Messgerät umfasst einen Messaufnehmer (10) vom Vibrationstyp mit mindestens einem im Betrieb vibrierenden Messrohr (13) zum Führen eines zu messenden Fluids und zum Erzeugen von im Fluid wirkenden Reibungskräften. Zum Vibrierenlassen des mindestens einen Messrohrs (13) ist ferner mit eine im Betrieb von einem Erregerstrom ($i_{exc}$) durchflossene Erregeranordnung (16) vorgesehen. Zum Erzeugen des Erregerstroms ($i_{exc}$) sowie eines die Viskosität des Fluids repräsentierenden Viskositäts-Messwert ($X_\eta$) weist das Viskositäts-Messgerät eine entsprechende Messgerät-Elektronik (50) auf, die mit einer Zwei-Leiter-Prozesskontroll-Schleife verbunden und davon mit elektrischer Energie versorgt ist. Außerdem speist die Messgerät-Elektronik ein mit dem Viskositäts-Messwert korrespondierendes Viskositätssignal in die Zwei-Leiter-Prozesskontroll-Schleife ein. Das Viskositäts-Messgerät ist zur Messung eines in einer Rohrleitung strömenden Fluid, insb. auch in explosionsgefährdeten Bereichen, geeignet.

Fig. 1

**EP 1 296 128 A1**

**Beschreibung**

Die Erfindung betrifft ein Viskositäts-Messgerät für ein in einer Rohrleitung strömendes Fluid.

In der Mess- und Automatisierungstechnik werden zur Ermittlung der Viskosität eines in einer Rohrleitung strömenden Fluids, insb. einer Flüssigkeit, oftmals solche Messgeräte verwendet, die mittels eines Messaufnehmers vom Vibrationstyp und einer daran angeschlossenen Messgerät-Elektronik im hindurchströmenden Fluid innere Reibungskräfte bewirken und von diesen abgeleitet ein mit der jeweiligen Viskosität korrespondierendes Viskositätssignal erzeugen.

Derartige Viskositäts-Messgeräte sowie Verfahren zum Messen der Viskosität mittels solcher Messgeräte sind z.B. in der US-A 45 24 610 oder in der WO-A 95/16 897 sowie auch in den nicht vorveröffentlichten europäischen Patentanmeldungen 01 109975.1 oder 01 120343.7 beschrieben, wobei die dort gezeigten Viskositäts-Messgeräte jeweils umfassen:

- einen Messaufnehmer vom Vibrationstyp

  -- mit einem mit der Rohrleitung kommunizierenden und im Betrieb vibrierenden Messrohr zum Führen des Fluids,
  -- mit einer Erregeranordnung zum Vibrierenlassen des Messrohrs,
  -- mit einer Sensoranordnung zum Erfassen von Vibrationen des Messrohrs und zum Erzeugen mindestens eines die Vibrationen des Messrohrs repräsentierenden Sensorsignals sowie

- eine Messgerät-Elektronik, die

  -- einen die Erregeranordnung speisenden Erregerstrom und
  -- zumindest einen die Viskosität des Fluids momentan repräsentierenden Viskositäts-Messwert liefert.

Derartige Viskositäts-Messgeräte sind netzgespeiste Messgeräte und müssen hierfür mindestens zwei elektrische Zuleitungen, also Leiter haben. Das mit der Viskosität korrespondierende Viskositätssignal, das zur Viskosität insb. proportional sein kann, wird entsprechend einem hierfür üblichen Standard, z.B. entsprechend dem zwischen 4 mA und 20 mA liegenden Strom-Standard und/oder einem üblichen Frequenz-Standard und/oder einem digitalen Standard, erzeugt und abgegeben; hierfür sind mindestens zwei weitere Leiter erforderlich.

Insbesondere bei der Verwendung mehrerer solcher Viskositäts-Messgeräte in einer Anlage und/ oder auch bei der Installation von Viskositäts-Messgeräten an einem von der externen Energieversorgung weit entfernten Ort bedeutet die Verwendung von zusätzlichem Leitungsmaterial einen nicht unerheblichen Verdrahtungsaufwand.

Ferner besteht in der Mess- und Automatisierungstechnik der Bedarf an standardisierten oder zumindest weitgehend einheitlichen Schnittstellen zwischen solchen Messgeräten und z.B. übergeordneten Steuer- und Regelungseinheiten. Auch ist man bestrebt, die Vielfalt solcher Schnittstellen möglichst überschaubar zu halten.

Zur Erreichung dieser Ziele besteht die Erfindung daher in einem Viskositäts-Messgerät.für ein in einer Rohrleitung strömendes Fluid, welches Viskositäts-Messgerät umfasst:

- einen Messaufnehmer vom Vibrationstyp, insb. vom Biegeschwingungstyp,

  -- mit mindestens einem mit der Rohrleitung kommunizierenden, im Betrieb vibrierenden Messrohr zum Führen des Fluids und zum Erzeugen von im Fluid wirkenden Reibungskräften,
  -- mit einer Erregeranordnung zum Vibrierenlassen des mindestens einen Messrohrs sowie

- eine einen vorgebbaren Bedarf an elektrischer Leistung aufweisende Messgerät-Elektronik, die

  -- einen die Erregeranordnung speisenden Erregerstrom und
  -- einen eine Viskosität des Fluids momentan repräsentierenden Viskositäts-Messwert liefert,
  -- wobei die Messgerät-Elektronik mit einer Zwei-Leiter-Prozesskontroll-Schleife verbunden und davon mit elektrischer Energie versorgt ist und
  -- wobei die Messgerät-Elektronik ein mit dem Viskositäts-Messwert korrespondierendes Viskositätssignal in die Zwei-Leiter-Prozesskontroll-Schleife einspeist.

Nach einer ersten Ausgestaltung der Erfindung

- ist der Bedarf der Messgerät-Elektronik an elektrischer Leistung variierbar und
- umfasst die Messgerät-Elektronik eine Steuerschaltung zum Einstellen des Bedarfs an elektrischer Leistung.

Nach einer zweiten Ausgestaltung umfasst die Messgerät-Elektronik:

- eine Erregerschaltung zum Erzeugen des Erregerstroms und
- eine Auswerteschaltung zum Erfassen des Sensorsignals und zum Ermitteln des Viskositäts-Messwerts, wobei
- die Steuerschaltung die Erregerschaltung und/oder die Auswerteschaltung zum Absenken des Bedarfs an elektrischer Leistung zeitweise deaktiviert.

Nach einer dritten Ausgestaltung der Erfindung enthält die Messgerät-Elektronik einen an die Zwei-Leiter-Prozesskontroll-Schleife gekoppelten Energiepuffer, der die von der Messgerät-Elektronik benötigte Leistung mindestens teilweise und/oder mindestens zeitweise bereitstellt.

In Weiterbildung der dritten Ausgestaltung veranlasst die Steuerschaltung ein zeitweises Laden des Energiepuffers.

Nach einer vierten Ausgestaltung der Erfindung ist das Viskositäts-Messgerät mittels der Zweidraht-Prozesskontroll-Schleife an einem Feldbus angeschlossen.

Nach einer fünften Ausgestaltung der Erfindung führt die Zweidraht-Prozesskontroll-Schleife einen Gleichstrom; dabei ist Viskositätssignal bevorzugt ein veränderlicher Gleichstrom, das insb. einen Bereich von 4 mA bis 20 mA umfasst, oder bevorzugt ein Digitalsignal.

Nach einer sechsten Ausgestaltung der Erfindung weist der Messaufnehmer eine Sensoranordnung zum Erfassen von Vibrationen des Messrohrs und zum Erzeugen von mindestens einem diese repräsentierenden Sensorsignal auf.

In Weiterbildung der sechsten Ausgestaltung stellt die Messgerät-Elektronik den Erregerstrom mittels des Sensorsignals ein.

Nach einer siebten Ausgestaltung der Erfindung umfasst die Erregerschaltung:

- einen Spitzenwertdetektor, dem als Eingangssignal das Sensorsignal zugeführt ist,
- eine Stufe, die eine Abweichung eines Viskositätssignal des Spitzenwertdetektors von einem einstellbaren Referenzsignal ermittelt, das eine Amplitude der Vibration des Messrohrs vorgibt,
- einen Multiplizierer für das Eingangssignal des Spitzenwertdetektors und ein Ausgangssignal der Stufe sowie
- eine die Erregeranordnung speisende Endstufe, von der ein Eingang mit einem Ausgang des Multiplizierers verbunden ist.

Nach einer achten Ausgestaltung der Erfindung umfasst die Endstufe einen Operationsverstärker, der wie folgt beschaltet ist:

- ein invertierender Eingang liegt über einen ersten Widerstand an einem Schaltungsnullpunkt,
- ein nicht-invertierender Eingang liegt über einen zweiten Widerstand, der den gleichen Widerstandswert wie der erste Widerstand hat, am Ausgang des Multiplizierers,
- ein Ausgang ist unter Zwischenschaltung eines dritten Widerstands mit einem ersten Pol einer Primärwicklung eines Transformators verbunden, von der ein zweiter Pol am Schaltungsnullpunkt liegt, welcher Transformator

-- eine mit der elektromechanischen Erregeranordnung verbundene Sekundärwicklung aufweist und

-- ein Strom-Aufwärts-Transformator ist,

- der invertierende Eingang ist über einen vierten Widerstand mit dem Ausgang verbunden, und
- der nicht-invertierende Eingang ist über einen fünften Widerstand, der den gleichen Widerstandswert wie der vierte Widerstand hat, am ersten Pol der Primärwicklung angeschlossen.

Nach einer neunten Ausgestaltung der Erfindung umfasst die Erregerschaltung:

- einen Spitzenwertdetektor, dem als Eingangssignal eines der Sensorsignale bzw. deren Summe zugeführt ist,
- eine Stufe, die eine Abweichung eines Ausgangssignal des Spitzenwertdetektors von einem einstellbaren Referenzsignal ermittelt, das eine Amplitude der Vibration des Messrohrs vorgibt,
- einen Pulsdauermodulator, von dem

-- einem ersten Eingang das Eingangssignal des Spitzenwertdetektors und einem zweiten Eingang ein Ausgangssignal der Stufe zugeführt sind, sowie

- eine die Erregeranordnung speisende Endstufe, von der ein Eingang mit einem Ausgang des Pulsdauermodulators verbunden ist.

Nach einer zehnten Ausgestaltung der Erfindung umfasst die Endstufe eine komplementäre Gegentakt-Endstufe, die von einer konstanten positiven und einer konstanten negativen Gleichspannung mit Energie versorgt ist.

Nach einer elften Ausgestaltung der Erfindung umfasst die Erregerschaltung:

- einen Spitzenwertdetektor, dem als Eingangssignal eines der Sensorsignale bzw. deren Summe zugeführt ist,
- eine Stufe, die eine Abweichung eines Ausgangssignal des Spitzenwertdetektors von einem einstellbaren Referenzsignal ermittelt, das eine Amplitude der Vibration des Messrohrs vorgibt,
- einen eingangsseitig mit einem Ausgang der Stufe (sa) verbundenen Gleichspannungswandler, der eine positive und eine negative, jeweils vom Ausgangssignal der Stufe abhängige Gleichspannung abgibt,
- einen eingangsseitig mit dem Eingangssignal des Spitzenwertdetektors gespeisten Komparator und
- eine die Erregeranordnung speisende Endstufe, von der ein Eingang mit einem Ausgang des Komparators verbunden ist und die von den vom Ausgangssignal der Stufe abhängigen Gleichspannungen mit Energie versorgt ist.

Nach einer zwölften Ausgestaltung der Erfindung umfasst die Endstufe eine komplementäre Gegentakt-Endstufe, die von der vom Ausgangssignal der Stufe abhängigen positiven und der entsprechenden negativen Gleichspannung mit Energie versorgt ist.

In weiterer Ausgestaltung der der Erfindung ist dem Spitzenwertdetektor ein Vorverstärker vorgeschaltet ist.

In anderer weiterer Ausgestaltung der Erfindung ist das Ausgangssignal der Stufe über einen Verstärker, über einen integrierenden Verstärker oder über einen differenzierenden und integrierenden Verstärker dem Multiplizierer bzw. dem Pulsdauermodulator bzw. dem Gleichspannungswandler zugeführt.

Die Erfindung beruht u.a. auf der Erkenntnis, dass allein die über Zwei-Leiter-Prozesskontroll-Schleifen minimal übertragene elektrische Energie für den Betrieb herkömmlicher Viskositäts-Messgeräte ausreicht. Ferner ist erkannt worden, dass sich die zu messende Viskosität in den meisten Anwendungsbereichen nur so geringfügig zeitlich ändert, dass bereits ein niederfrequentes Aktualisieren des Viskositäts-Messwerts und somit auch ein nur temporärer Betrieb des Messaufnehmers möglich ist.

Ferner kann der zeitliche Abstand zwischen den Aktualisierungen des Viskositäts-Messwerts, ohne weiteres so groß bemessen werden - oder in anderen Worten kann die Aktualisierungsfrequenz so klein bemessen werden -, dass selbst für den evtuell zu erwartenden Fall, dass die über die Zwei-Leiter-Prozesskontroll-Schleife übertragene Energie zeitweise dem Leistungsbedarf des Viskositäts-Messgeräts nicht zu erfüllen in der Lage wäre, ein Energiepuffer aufgeladen und somit die erforderliche Leistung in der Messgerät-Elektronik stets verfügbar gehalten werden kann.

Durch die Erfindung wird erstmals ein marktfähiges Zwei-Leiter-Viskositäts-Messgerät geschaffen; darin besteht ein Hauptvorteil der Erfindung. Die beiden Leiter dienen sowohl für die Energieversorgung, wozu an die zwei Leiter von außen eine Energiequelle, meist eine Gleichspannungsquelle, anzulegen ist, als auch für die Übertragung des Ausgangsstroms, bei der Erfindung also des Viskositätssignals.

Bevorzugt ist das Zwei-Leiter-Viskositäts-Messgerät so ausgebildet, daß der in den beiden Leitern fließende Ausgangsstrom ein mittels eines physikalisch-elektrischen Wandlers erzeugtes Wandlersignal, insb. möglichst proportional, abbildet. Im Falle der Erfindung ist der physikalisch-elektrische Wandler das mindestens eine Messrohr und der Ausgangsstrom ist das Viskositätssignal. Bei Zwei-Leiter-Messgeräten entsprechend dem eingangs erwähnten, zwischen 4 mA und 20 mA liegenden Strom-Standard, entspricht ein bestimmter Stromwert innerhalb dieses Strombereichs genau einem Ausgangssignalwert, bei der Erfindung also genau einem Wert des Viskositätssignals. Lediglich der Strombereich unterhalb von 4 mA ist für die Energieversorgung der Elektronik des Zwei-Leiter-Viskositäts-Messgeräts nutzbar. Dies bedingt, dass die Energieversorgung nur eine Leistung in der Größenordnung von 50 mW zur Verfügung stellt, die im Folgenden als Klein-Leistung bezeichnet wird. Ein Zwei-Leiter-Viskositäts-Messgerät mit dem erwähnten, zwischen 4 mA und 20 mA liegenden Strom-Standard ist aufgrund dieser Sachverhalte besonders gut für den Einsatz in explosionsgefährdeter Umgebung geeignet, so dass ein derartiges Zwei-Leiter-Viskositäts-Messgerät die Vorschriften der verschiedenen Explosionsschutz-Klassen einhalten kann.

Ferner kann das Zwei-Leiter-Viskositäts-Messgerät in einfacher Weise so ausgebildet werden, dass es mit einem der üblichen Feldbusse zusammenarbeiten kann. Dies kann einerseits durch direkten Anschluss an den Feldbus, z.B. entsprechend dem FIELDBUS-Protokoll, erfolgen (FIELDBUS ist eine eingetragene Marke der FIELDBUS FOUNDATION). Andererseits kann das Zusammenarbeiten mittels eines Buskopplers, z.B. entsprechend dem sogenannten HART-Protokoll, indirekt erfolgen (HART ist eine eingetragene Marke der HART User Group).

Weitere Vorteile der Erfindung und sie selbst werden nun anhand der Figuren der Zeichnung näher erläutert, in der bevorzugte Ausführungsbeispiele dargestellt sind. Funktionsgleiche Teile sind in den einzelnen Figuren mit denselben Bezugszeichen versehen, jedoch sind diese Bezugszeichen in nachfolgenden Figuren nur dann wiederholt, wenn es sinnvoll erscheint.

Fig. 1    zeigt perspektivisch in einer Seitenansicht ein der Erzeugung eines Viskositäts-Messwerts dienendes Viskositäts-Messgerät,

Fig. 2    zeigt teilweise geschnitten ein Ausführungsbeispiel eines für das Viskositäts-Messgerät von Fig. 1 geeigneten Messaufnehmers vom Vibrations-Typ perspektivisch in einer ersten Seitenansicht,

Fig. 3    zeigt den Messaufnehmer von Fig. 2 perspektivisch in einer zweiten Seitenansicht,

Fig. 4    zeigt ein Ausführungsbeispiel einer elektromechanischen Erregeranordnung für den Messaufnehmer von Fig. 2,

Fig. 5    zeigt schematisch nach der Art eines Blockschaltbildes eine bevorzugte Ausgestaltung einer für das Viskositäts-Messgerät der Fig. 1 bis 4 geeigneten Messgerät-Elektronik,

Fig. 6    zeigt teilweise nach Art eines Blockschaltbilds das Schaltbild eines Ausführungsbeispiels einer ersten bevorzugten Erregerschaltung,

Fig. 7    zeigt teilweise nach Art eines Blockschaltbilds das Schaltbild eines Ausführungsbeispiels einer zweiten bevorzugt Erregerschaltung,

Fig. 8    zeigt teilweise nach Art eines Blockschaltbilds das Schaltbild eines Ausführungsbeispiels einer dritten bevorzugten Erregerschaltung,

Fig. 9    zeigt ein Schaltbild eines Ausführungsbeispiels einer bevorzugten Endstufe der Erregerschaltung nach Fig. 6,

Fig. 10   zeigt ein Schaltbild eines Ausführungsbeispiels einer bevorzugten Endstufe der Erregerschaltung nach Fig. 7, und

Fig. 11   zeigt ein Schaltbild eines Ausführungsbeispiels einer bevorzugten Endstufe der Erregerschaltung nach Fig. 8.

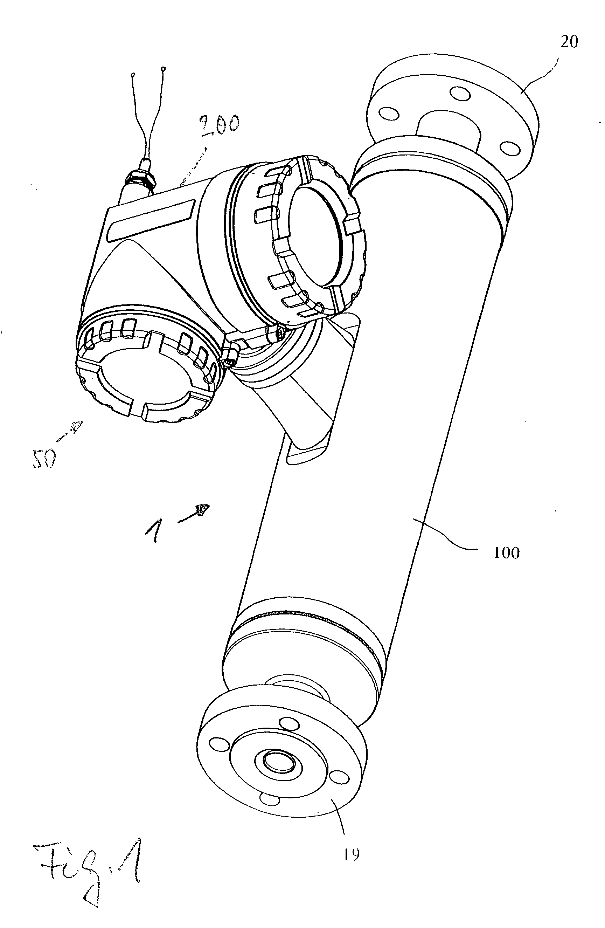

In Fig. 1 ist ein Viskositäts-Messgerät 1 mit einem, bevorzugt in einem Wandlergehäuse 100 untergebrachten, Messaufnehmer 10 vom Vibrationstyp sowie mit einem Elektronikgehäuse 200 dargestellt, in dem eine mit dem Messaufnehmer 10 elektrisch verbundene Messgerät-Elektronik 50 untergebracht ist; diese wird unten noch ausführlich beschrieben.

Das Viskositäts-Messgerät 1 dient dazu, eine Viskosität η eines in einer Rohrleitung strömenden Fluids zu erfassen und in einen diese Viskosität η momentan repräsentierenden Viskositäts-Messwert $X_η$ abzubilden; die Rohrleitung ist aus Übersichtlichkeitsgründen nicht dargestellt. Damit die Viskosität η erfasst werden kann, werden mittels des von der Messgerät-Elektronik 50 zu Vibrationen erregten Messaufnehmers 10 im hindurchströmenden Fluid Reibungskräfte erzeugt, die von der Viskosität η abhängig sind und die auf den Messaufnehmer 10 messbar, also sensorisch erfassbar und elektronisch auswertbar, zurückwirken.

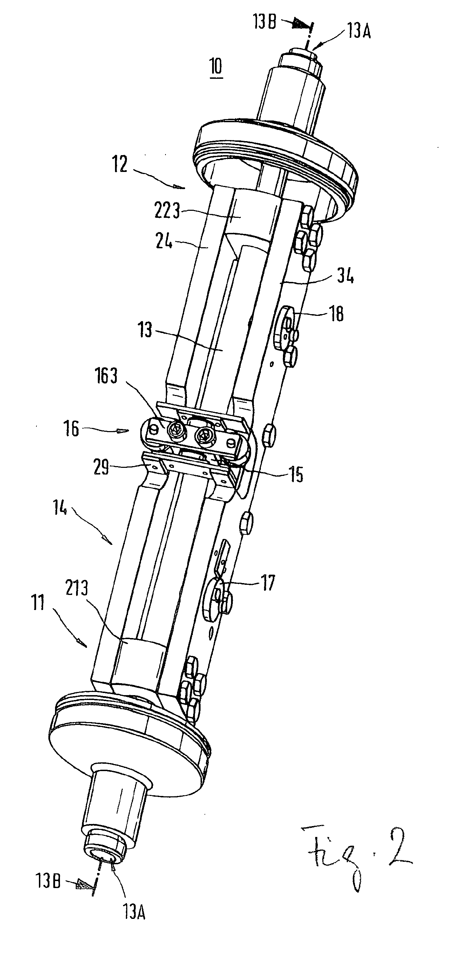

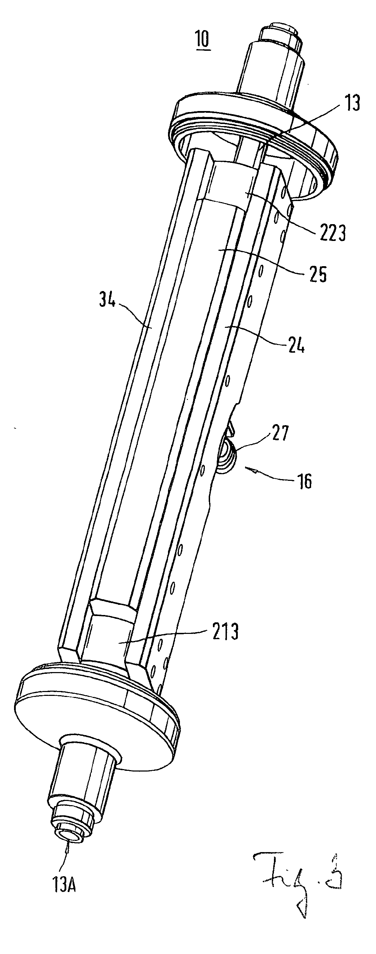

In den Fig. 2 und 3 ist ein Ausführungsbeispiel einer als Messaufnehmer 10 dienenden physikalisch-elektrischen Wandleranordnung vom Vibrations-Typ gezeigt. Der Aufbau einer derartigen Wandleranordnung ist z.B. in der US-A 60 06 609 ausführlich beschrieben, allerdings zur Messung anderer Strömungsgrößen.

Zum Führen des zu messenden Fluids umfasst der Messaufnehmer 10 wenigstens ein ein Einlassende 11 und ein Auslassende 12 aufweisendes Messrohr 13 von vorgebbarem, im Betrieb elastisch verformbarem Messrohrlumen 13A und von vorgebbarer Nennweite.

Elastisches Verformen des Messrohrlumens 13A bedeutet hier, dass zum Erzeugen von fluidinternen und somit das Fluid beschreibenden Reaktionskräften, nämlich von Scher- oder auch Reibungskräften des Messaufnehmers 10, eine Raumform und/oder eine Raumlage des Messrohrlumens 13A innerhalb eines Elastizitätsbereiches des Messrohrs 13 in vorgebbarer Weise zyklisch, insb. periodisch, verändert wird, vgl. z. B. die US-A 48 01 897, die US-A 56 48 616, die US-A 57 96 011 und/oder die US-A 60 06 609.

Es sei an dieser Stelle ausdrücklich darauf verwiesen, dass zur Realisierung der Erfindung anstelle eines Messaufnehmers gemäss dem Ausführungsbeispiel von Fig. 2 und 3 praktisch jeder der im Stand der Technik beschriebenen Messaufnehmer der genannten anderen Strömungsgrößen verwendet werden kann, insb. ein solcher vom Biegeschwingungstyp mit ausschließlich oder zumindest anteilig in einem Biegeschwingungsmode vibrierendem, gebogenem oder geradem Messrohr.

Weitere geeignete Ausführungsformen für solche als Messaufnehmer 10 dienende Wandleranordnungen sind z.B. in der US-A 53 01 557, der US-A 53 57 811, der US-A 55 57 973, der US-A 56 02 345, der US-A 56 48 616 oder der US-A 57 96 011 ausführlich beschrieben, deren Offenbarung zur Offenbarung der Anmeldung gehört.

Als Material für das in den Fig. 2 und 3 gerade Messrohr 13 sind z.B. Titanlegierungen besonders geeignet. Anstelle von Titanlegierungen können aber auch andere für derartige, insb. auch für gebogene, Messrohre üblicherweise verwendete Materialien wie z.B. rostfreier Stahl oder Zirconium etc. verwendet werden.

Das Messrohr 13, das in der üblichen Weise einlass-seitig und auslass-seitig mit der das Fluid zu- bzw. abführenden Rohrleitung kommuniziert, ist in einen starren, insb. biege- und verwindungssteifen, bevorzugt von einem Wandlergehäuse 100 umhüllten, Tragrahmen 14 schwingfähig eingespannt.

Der Tragrahmen 14 ist am Messrohr 13 einlass-seitig mittels einer Einlassplatte 213 und ausslass-seitig mittels einer Auslassplatte 223 fixiert, wobei letztere beide jeweils von entsprechenden Verlängerungsstücken des Messrohrs 13 durchstoßen sind. Ferner weist der Tragrahmen 14 eine erste Seitenplatte 24 und eine zweite Seitenplatte 34 auf, welche beiden Seitenplatten 24, 34 jeweils derart an der Einlassplatte 213 und an der Auslassplatte 223 fixiert sind, dass sie praktisch parallel zum Messrohr 13 verlaufen und von diesem sowie voneinander beabstandet angeordnet sind, vgl. Fig. 2. Somit sind einander zugewandte Seitenflächen der beiden Seitenplatten 24, 34 ebenfalls parallel zueinander.

Ein Längsstab 25 ist an den Seitenplatten 24, 34, vom Messrohr 13 beabstandet, fixiert, der als Schwingungen des Messrohrs 13 tilgende Auswuchtmasse dient. Der Längstab 25 erstreckt sich, wie in Fig. 3 dargestellt ist, praktisch parallel zur gesamten schwingfähigen Länge des Messrohrs 13; dies ist jedoch nicht zwingend, der Längstab 25 kann selbstver-

ständlich, falls erforderlich, auch kürzer ausgeführt sein.

Der Tragrahmen 14 mit den beiden Seitenplatten 24, 34, der Einlassplatte 213, der Auslassplatte 223 und dem Längsstab 25 hat somit eine Längsschwerelinie, die praktisch parallel zu einer das Einlassende 11 und das Auslassende 12 virtuell verbindenden Messrohr-Mittelachse 13B verläuft.

In den Fig. 2 und 3 ist durch die Köpfe der gezeichneten Schrauben angedeutet, dass das erwähnte Fixieren der Seitenplatten 24, 34 an der Einlassplatte 213, an der Auslassplatte 223 und am Längsstab 25 durch Verschrauben erfolgen kann; es können aber auch andere geeignete und dem Fachmann geläufige Befestigungsarten angewendet werden.

Für den Fall, dass der Messaufnehmer 10 lösbar mit der Rohrleitung zu montieren ist, ist dem Messrohr 13 einlass-seitig ein erster Flansch 19 und auslass-seitig ein zweiter Flansch 20 angeformt, vgl. Fig. 1; anstelle der Flansche 19, 20 können aber z.B. auch andere Rohrleitungs-Verbindungsstücke zur lösbaren Verbindung mit der Rohrleitung angeformt sein, wie z.B. die in Fig. 2 angedeuteten sogenannten Triclamp-Anschlüsse. Falls erforderlich kann das Messrohr 13 aber auch direkt mit der Rohrleitung, z.B. mittels Schweissen oder Hartlötung etc. verbunden werden bzw. sein

Zum Erzeugen der erwähnten Reibungskräfte wird das Messrohr 13 im Betrieb des Messaufnehmers 10, angetrieben von einer mit dem Messrohr gekoppelten elektro-mechanischen Erregeranordnung 16, bei einer vorgebbaren Schwingfrequenz, insb. einer natürlichen Resonanzfrequenz, im sogenannten Nutzmode vibrieren gelassen und somit in vorgebbarer Weise elastisch verformt; es wird angemerkt, dass diese Resonanzfrequenz auch von einer Dichte des Fluids abhängig ist.

Im gezeigten Ausführungsbeispiel wird das vibrierende Messrohr 13, wie bei solchen Wandleranordnungen vom Biegeschwingungs-Typ üblich, aus einer statischen Ruhelage räumlich, insb. lateral, ausgelenkt; Gleiches gilt praktisch auch für solche Wandleranordnungen, bei denen ein oder mehrere gebogene Messrohre Auslegerschwingungen um eine entsprechende, das jeweilige Einlassund Auslassende virtuell verbindende Längsachse ausführen, oder auch für solche Wandleranordnungen, bei denen ein oder mehere gerade Messrohre lediglich ebene Biegeschwingungen um ihre Messrohrlängsachse ausführen.

In einem weiteren Fall, dass als Messaufnehmer 10, wie z.B. in der erwähnten WO-A 95/16 897 beschrieben, eine Wandleranordnung vom peristaltischen Radialschwingungs-Typ dient und der Querschnitt des vibrierenden Messrohr in der dafür üblichen Weise symmetrisch verformt wird, verbleibt die Messrohrlängsachse in ihrer statischen Ruhelage.

Die Erregeranordnung 16 dient dazu, unter Umsetzung einer von der Messgerät-Elektronik 50 eingespeisten elektrischen Erregerleistung $P_{exc}$ eine auf das Messrohr 13 einwirkende Erregerkraft $F_{exc}$ zu erzeugen. Die Erregerleistung $P_{exc}$ dient praktisch lediglich zur Kompensation des über mechanische und fluidinterne Reibung dem Schwingungssystem entzogenen Leistungsanteils. Zur Erzielung eines möglichst hohen Wirkungsgrades ist die Erregerleistung $P_{exc}$ möglichst genau so eingestellt, dass praktisch die Schwingungen des Messrohrs 13 im Nutzmode, z.B. die einer Grund-Resonanzfrequenz, aufrecht erhalten werden.

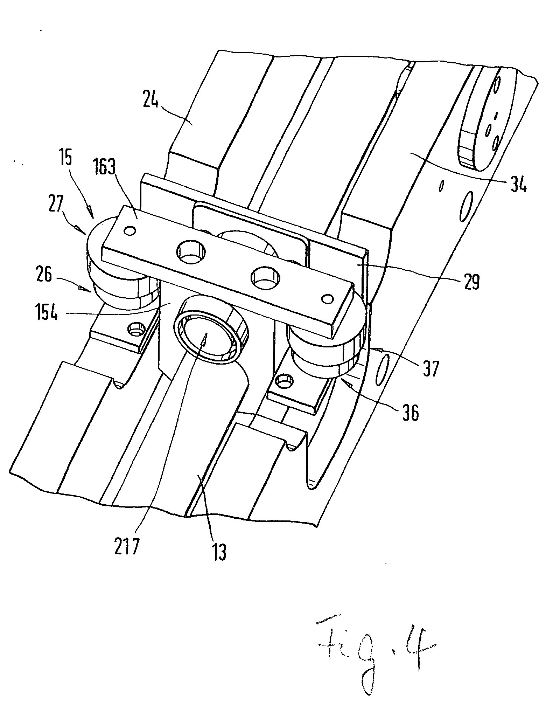

Zum Zwecke des Übertragens der Erregerkraft $F_{exc}$ auf das Messrohr 13 weist die Erregeranordnung 16, wie in Fig. 4 dargestellt ist, eine starre, elektromagnetisch und/oder elektrodynamisch angetriebene Hebelanordnung 15 mit einem am Messrohr 13 biegefest fixierten Ausleger 154 und mit einem Joch 163 auf. Das Joch 163 ist an einem vom Messrohr 13 beabstandeten Ende des Auslegers 154 ebenfalls biegefest fixiert, und zwar so, dass es oberhalb des Messrohrs 13 und quer zu ihm angeordnet ist.

Als Ausleger 154 kann z.B. eine metallische Scheibe dienen, die das Messrohr 13 in einer Bohrung aufnimmt. Für weitere geeignete Ausführungen der Hebelanordnung 15 sei an dieser Stelle auf die bereits erwähnte US-A 60 06 609 verwiesen. Die Hebelanordnung 15 ist T-förmig und so angeordnet, vgl. Fig. 4, dass sie etwa in der Mitte zwischen Einlass- und Auslassende 11, 12 auf das Messrohr 13 einwirkt, wodurch dieses im Betrieb mittig seine größte laterale Auslenkung erfährt.

Zum Antreiben der Hebelanordnung 15 umfasst die Erregeranordnung 16 gemäß Fig. 4 eine erste Erregerspule 26 und einen zugehörigen ersten dauermagnetischen Anker 27 sowie eine zweite Erregerspule 36 und einen zugehörigen zweiten dauermagnetischen Anker 37. Die beiden, elektrisch bevorzugt in Reihe geschalteten, Erregerspulen 26, 36 sind beiderseits des Messrohrs 13 unterhalb des Jochs 163 am Tragrahmen 14, insb. lösbar, so fixiert, dass sie mit ihrem jeweils zugehörigen Anker 27 bzw. 37 im Betrieb in Wechselwirkung stehen. Die beiden Erregerspulen 26, 36, können, falls erforderlich, selbstverständlich auch einander parallelgeschaltet sein.

Wie in Fig. 2 und 4 dargestellt ist, sind die beiden Anker 27, 37 derart voneinander beabstandet am Joch 163 fixiert, dass im Betrieb des Messaufnehmers 10 der Anker 27 praktisch von einem Magnetfeld der Erregerspule 26 und der Anker 37 praktisch von einem Magnetfeld der Erregerspule 36 durchsetzt und aufgrund entsprechender elektrodynamischer und/oder elektromagnetischer Kraftwirkungen bewegt wird.

Die mittels der Magnetfelder der Erregerspulen 26, 36 erzeugten Bewegungen der Anker 27, 37 werden vom Joch 163 und vom Ausleger 154 auf das Messrohr 13 übertragen. Diese Bewegungen der Anker 27, 37 sind so ausgebildet, dass das Joch 163 alternierend in Richtung der Seitenplatte 24 oder in Richtung der Seitenplatte 34 aus seiner Ruhelage ausgelenkt wird. Eine entsprechende, zur bereits erwähnten Messrohr-Mittelachse 13B parallele Drehachse der Hebelanordnung 15 kann z.B. durch den Ausleger 154 verlaufen.

Der Tragrahmen 14 umfasst ferner eine mit den Seitenplatten 24, 34, insb. lösbar, verbundene Halterung 29 für die elektromechanische Erregeranordnung 16, insb. zum Haltern der Erregerspulen 26, 36 und ggf. einzelner Komponenten einer weiter unten genannten Magnetbremsanordnung 217.

Beim Messaufnehmer 10 des Ausführungsbeispiels bewirken die lateralen Auslenkungen des am Einlassende 11 und am Auslassende 12 fest eingespannten, vibrierenden Messrohrs 13 gleichzeitig eine elastische Verformung seines Messrohrlumens 13A, die praktisch über die gesamte Länge des Messrohrs 13 ausgebildet ist.

Ferner wird im Messrohr 13 aufgrund eines über die Hebelanordnung 15 auf dieses wirkenden Drehmoments gleichzeitig zu den lateralen Auslenkungen zumindest abschnittsweise eine Verdrehung um die Messrohr-Mittelachse 13B erzwungen, so dass das Messrohr 13 praktisch in einem als Nutzmode dienenden gemischten Biegeschwingungs-Torsionsmode schwingt.

Die Verdrehung des Messrohrs 13 kann dabei so ausgebildet sein, dass eine laterale Auslenkung des vom Messrohr 13 beabstandeten Ende des Auslegers 154 entweder gleich- oder entgegen-gerichtet zur lateralen Auslenkung des Messrohrs 13 ist. Das Messrohr 13 kann also Torsionsschwingungen in einem dem gleich-gerichteten Fall entsprechenden ersten Biegeschwingungs-Torsionsmode oder in einem dem entgegen-gerichtet Fall entsprechenden zweiten Biegeschwingungs-Torsionsmode ausführen. Dann ist beim Messaufnehmer 10 gemäss dem Ausführungsbeispiel die natürliche Grund-Resonanzfrequenz des zweiten Biegeschwingungs-Torsionsmodes von z.B. 900 Hz annährend doppelt so hoch wie die des ersten Biegeschwingungs-Torsionsmodes.

Für den Fall, dass das Messrohr 13 betriebsmäßig Schwingungen lediglich im zweiten Biegeschwingungs-Torsionsmode ausführen soll, ist eine auf dem Wirbelstromprinzip beruhende Magnetbremsanordnung 217 in die Erregeranordnung 16 integriert, die dazu dient, die Lage der erwähnten Drehachse zu stabilisieren. Mittels der Magnetbremsanordnung 217 kann somit sichergestellt werden, dass das Messrohr 13 stets im zweiten Biegeschwingungs-Torsionsmode schwingt und somit allfällige äußere Störeinflüsse auf das Messrohr 13 nicht zu einem spontanen Wechsel in einen anderen, insb. nicht in den ersten, Biegeschwingungs-Torsionsmode führen. Einzelheiten einer solchen Magnetbremsanordnung sind in der US-A 60 06 609 ausführlich beschrieben.

Es sei an dieser Stelle noch erwähnt, dass bei dem auf diese Weise gemäß dem zweiten Biegeschwingungs-Torsionsmode ausgelenkten Messrohr 13 die gedachte Messrohr-Mittelachse 13B praktisch leicht deformiert wird und somit bei den Schwingungen keine Ebene sondern eine schwach gewölbte Fläche aufspannt.

Ferner weist eine in dieser Fläche liegende, vom Mittelpunkt der Messrohr-Mittelachse beschriebene Bahnkurve die kleinste Krümmung aller von der Messrohr-Mittelachse beschriebenen Bahnkurven auf.

Zum Detektieren der Verformungen des Messrohrs 13 umfasst der Messaufnehmer 10 ferner eine Sensoranordnung 60, die mittels wenigstens eines auf Vibrationen des Messrohrs 13 reagierenden ersten Sensors 17 ein diese repräsentierendes erstes, insb. analoges, Sensorsignal s1 erzeugt. Der Sensor 17 kann z.B. mittels eines dauermagnetischen Ankers gebildet sein, der am Messrohr 13 fixiert ist und mit einer vom Tragrahmen 14 gehalterten Sensorspule in Wechselwirkung steht.

Als Sensor 17 sind besonders solche geeignet, die, basierend auf dem elektrodynamischen Prinzip, eine Geschwindigkeit der Auslenkungen des Messrohrs 13 erfassen. Es können aber auch beschleunigungsmessende elektrodynamische oder aber auch wegmessende resistive oder optische Sensoren verwendet werden. Selbstverständlich können auch andere dem Fachmann bekannte und für die Detektion solcher Vibrationen geeignete Sensoren verwendet werden.

Die Sensoranordnung 60 umfasst ferner einen, insb. zum ersten Sensor 17 identischen, zweiten Sensor 18, mittels dem sie ein ebenfalls Vibrationen des Messrohrs 13 repräsentierdendes zweites Sensorsignal s2 liefert. Die beiden Sensoren 17, 18 sind bei dieser Ausgestaltung entlang des Messrohrs 13 voneinander beabstandet, insb. in einem gleichen Abstand von der Mitte des Messrohrs 13, so im Messaufnehmer 10 angeordnet, dass mittels der Sensoranordnung 60 sowohl einlass-seitige als auch auslass-seitige Vibrationen des Messrohrs 13 örtlich erfasst und in die entsprechenden Sensorsignale s1 bzw. s2 abgebildet werden.

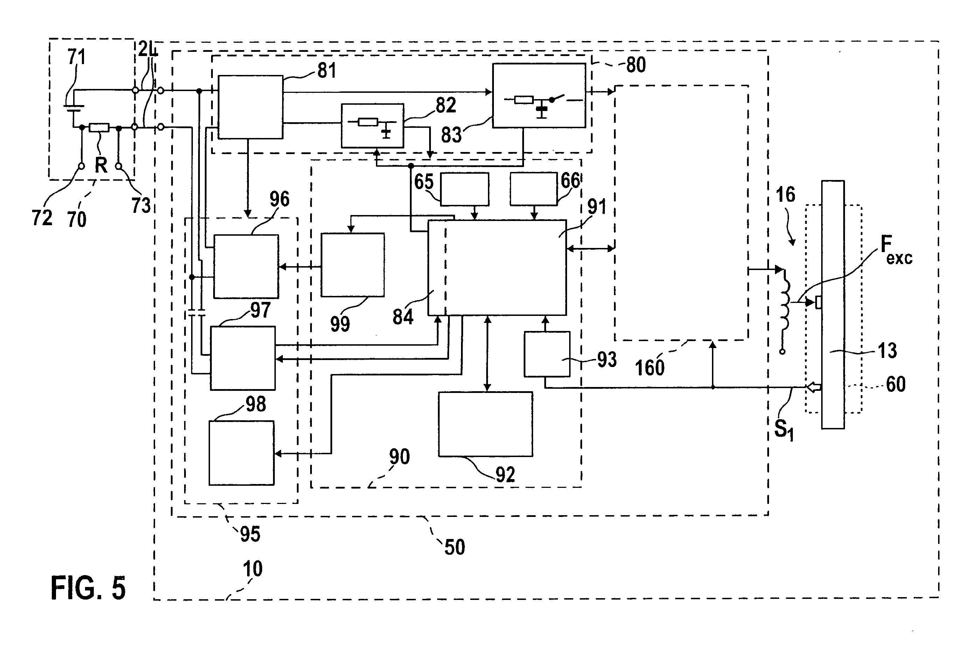

Das erste und ggf. das zweite Sensorsignal s1 bzw. s2, die üblicherweise jeweils eine der momentanen Schwingfrequenz des Messrohrs 13 entsprechende Signalfrequenz aufweisen, sind, wie in Fig. 5 gezeigt, der Messgerät-Elektronik 50 zugeführt.

Zum Vibrierenlassen des Messrohrs 13 wird die Erregeranordnung 16 mittels eines von der Messgerät-Elektronik 50 gelieferten, gleichfalls oszillierenden Erregerstroms $i_{exc}$ von einstellbarer Amplitude und von einstellbarer Erregerfrequenz $f_{exc}$ derart gespeist, dass die Erregerspulen 26, 36 im Betrieb von diesem durchflossen sind und in entsprechender Weise die zum Bewegen der Anker 27, 37 erforderlichen Magnetfelder erzeugt werden. Der Erregerstrom $i_{exc}$ ist sinusförmig.

Die Erregerfrequenz $f_{exc}$ des Erregerstroms $i_{exc}$ ist beim Ausführungsbeispiel so gewählt und sie stellt sich so ein, dass das lateral schwingende Messrohr 13 möglichst ausschliesslich im zweiten Biegeschwingungs-Torsionsmode torsional schwingt.

In Fig. 5 ist schematisch nach Art eines Blockschaltbildes eine bevorzugte Ausgestaltung einer für das Viskositäts-Messgerät der Fig. 1 bis 4 geeigneten Messgerät-Elektronik 50 dargestellt. In Fig. 5 sind rechts schematisch das Meßrohr 13, die Erregeranordnung 16 und die Sensoranordnung 60 dargestellt, wobei die Erregerspule 26 eigens gezeichnet ist; sie liegt an einem Schaltungsnullpunkt SN des Vibrations-Messgeräts 1.

Die erwähnte Messgerät-Elektronik 50 ist durch die gestrichelte Einrahmung angedeutet und mit einer Zwei-Leiter-Prozesskontroll-Schleife 2L verbunden, die im Folgenden kurz als Schleife bezeichnet ist. Sie führt vom Viskositäts-Messgerät 1 z.B. zu einer Prozesskontroll-Warte 70. Dort ist die Schleife 2L mit einer Serienschaltung aus einer äußeren einen Schleifen-Strom in die Schleif 2L einspeisenden Energiequelle 71, z.B. einer Gleichspannungsquelle, und aus einem Messwiderstand R verbunden; dieser ist mit zwei Mess-Anschlüssen 72. 73 versehen, damit daran das Viskositätssignal als Spannungsabfall abgreifbar ist, der zur Anzeige gebracht werden oder einer weiteren Signalverarbeitung zugeführt werden kann. Die Energiequelle 70 versorgt somit die Messgerät-Elektronik 50 mit der zu ihrem Betrieb erforderlichen Energie. Wenn Die Schleife 2L nach dem in der industriellen Messtechnik seit langem eingeführten Strom-Standard von 4 mA bis 20 mA arbeitet, steht für die Energieversorgung der Strombereich zwischen 0 mA und 3,6 mA zur Verfügung.

Die Schleife 2L führt mit ihren beiden Leitern innerhalb der Messgerät-Elektronik 50 zunächst zu einem Spannungsregler 81, der aus der meist schwankenden Spannung der Energiequelle 70 eine ausreichend konstante Spannung erzeugt. Mit dieser konstanten Spannung werden alle Teilschaltungen der Messgerät-Elektronik 50 dauernd oder intermittierend gespeist, s. hierzu unten.

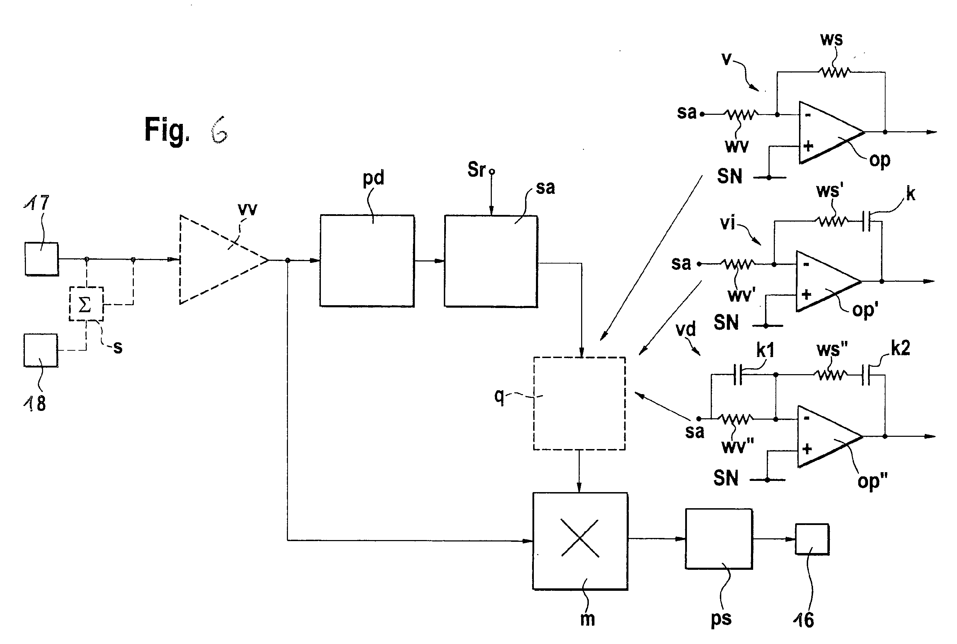

Die Messgerät-Elektronik 50 enthält zur Speisung der Erregeranordnung 16 mit dem erwähnten Erregerstrom $i_{exc}$ eine Erregerschaltung 160; bevorzugte Ausführungsbeispiele davon sind anhand der Fig. 6 bis 11 erläutert. Hier sei zunächst lediglich erwähnt, dass das Sensorsignal s1 des Sensors 16 der Erregerschaltung 160 zugeführt ist.

Wie in Fig. 5 dargestellt steht die Erregerschaltung 160 auch in Kontakt mit einem Mikroprozessor 91 einer Auswerteschaltung 90, von dem die Erregerschaltung 160 z.B. die erforderlichen Betriebsdaten empfängt oder an den die Erregerschaltung 160 intern erzeugte Einstellsignale und/oder -parameter, insb. auch Informationen über den eingestellten Erregerstrom $i_{exc}$ und/oder die in den Messaufnehmer eingespeiste Erregerleistung $P_{exc}$ sendet. Zusätzlich zum oder anstelle des Mikroprozessors 91 kann Auswerteschaltung 90 auch einen der Erzeugung von Meß- und Betriebsdaten dienenden digitalen Signalprozessor aufweisen.

Die seitens der Auswerteschaltung 90 erzeugten und/oder empfangenen Meßoder Betriebsdaten können z.B. in einem Datenspeicher 92 flüchtig abgespeichert werden.

Nach einer bevorzugten Ausgestaltung der Erfindung ist auch das Sensorsignal s1 der Auswerteschaltung 90 direkt zugeführt. Dort gelangt letzteres via Analog/Digital-Wandler 93 digitalisiert zu einem Mikround Signalprozessor 91, der mittels des Sensorsignals s1 den Viskositäts-Messwert $X_\eta$ liefert. Dem Mikround Signalprozessor 91 sind ein Systemtakt-Generator 65 und eine Watch-Dogund Reset-Stufe 66 zugeordnet.

Mittels eines Stromreglers 96, dem ein vom digitalen Viskositäts-Meßwert $X_\eta$ gespeister Digital/ Analog-Wandler 99 vorgeschaltet ist, moduliert die Messgerät-Elektronik 50 den Viskositäts-Messwert $X_\eta$ auf eine Amplitude des in der Schleife 2L fließenden Schleifen-Stroms. Anders gesagt, durch das Einstellen der Amplitude des Schleifen-Stroms in Abhängigkeit vom momentanen Viskositäts-Messwert $X_\eta$ speist die Messgerät-Elektronik 50 ein mit dem Viskositäts-Messwert $X_\eta$ korrespondierendes Viskositätssignal in die Schleife 2L ein.

Nach einer bevorzugten Ausgestaltung der Erfindung ist in der Messgerät-Elektronik 50 ferner eine Kommunikations-Schnittstelle 97 vorgesehen, die dazu dient neben dem Viskositäts-Messwert $X_\eta$ z.B. auch interne Meßgeräte-Parameter in via Schleife 2L übertragbare Signale umzuwandeln und in die Schleife 2L einzukopplen oder aber auch von extern via Schleife 2L übertragene Meßgeräte-Parameter zu empfangen. Als Kommunikations-Schnittstelle 97 kann hierbei z.B. eine Schnittstelle nach dem HART©-Feld-Kommunikations-Protokoll gemäß der HART© *Communication Foundation,* Austin TX, sein, die also FSK-codierte höher frequente Wechselspannungen als Signalträger verwendet.

Nach einer weiteren bevorzugten Ausgestaltung der Erfindung enthält die Messgerät-Elektronik 50 mindestens einen an die Schleife 2L gekoppelten Energiepuffer; in Fig. 5 sind davon zwei zu sehen, nämlich die Energiepuffer 82, 83. Mittels eines solchen Energiepuffers ist es möglich, die von der Messgerät-Elektronik 50 benötigte Leistung mindestens teilweise und/oder mindestens zeitweise bereitzustellen, insb. aber dann, wenn die von der Schleife 2L momentan zur Verfügung gestellte Energie zum Betrieb der Messgerät-Elektronik 50 nicht ausreicht.

Der Energiepuffer 82 liegt dauernd sowohl am Spannungsregler 81 als auch an der Auswerte-Schaltung 90, so dass er nach Bedarf auf- und entladen wird.

Demgegenüber liegt der Energiepuffer 83 über einen Schalter an der Erregerschaltung 160, mittels dem die Entladung unterbrochen werden kann.

Nach einer weiteren bevorzugten Ausgestaltung der Erfindung ist der Bedarf der Messgerät-Elektronik 50 an elektrischer Leistung, also deren Leistungsaufnahme variierbar und kann somit an die aktuell an die zur Verfügung stehende elektrische Leistung angepaßt werden. Das Variieren des Leistungsbedarfs der Messgerät-Elektronik 50 kann dabei z.B.in Abhängigkeit von der momentan verfügbaren Leistung gesteuert oder aber auch zeitgetaktet erfolgen. Zum Zwecke der Steuerung der Leistungsaufnahme ist daher ferner in der Meßgerät-Elektronik 50 eine Steuerschaltung 84 vorgesehen, die z.B. mittels des Mikro- und Signalprozessors 91 realisiert sein kann.

Die Regulierung des Bedarfs an elektrischer Leistung kann dabei z.B. so erfolgen, dass Steuerschaltung 84 die Erregerschaltung 160 und/oder die Auswerteschaltung 90 zum Reduzieren der Leistungsaufnahme zeitweise deaktiviert. Deaktivieren der Auswerteschaltung 90 heißt hierbei z.B., das letztere in einen Betriebszustand von niedriger Leistungsaufnahme versetzt wird, bei dem zumindest die zur Steuerung des Energiespeichers bzw. zur Reaktivierung der Auswerteschaltung erforderlichen Funktionen in Betrieb belassen werden und bei dem die für den Betrieb der Auswerteschaltung 90 nach deren Reaktivierung erforderlichen den Meßdaten und/oder Betriebsparameter in einem Datenspeicher, z.B. im flüchtigen Datenspeicher 92, entsprechend verfügbar gehalten werden. Des weiteren kann die Errgerschaltung z.B. auch dadurch deaktiviert werden, indem sie völlig abgeschaltet wird.

In Fig. 6 ist teilweise nach Art eines Blockschaltbilds das Schaltbild einer ersten bevorzugten Erregerschaltung dargestellt. Einem Spitzenwertdetektor pd ist als Eingangssignal eines der Sensorsignale bzw. deren Summe zugeführt. Somit ist der Spitzenwertdetektors pd eingangsseitig mit einem der Sensoren verbunden - in Fig. 6 ist das der Sensor 17.

Ein erster Eingang einer Stufe sa ist mit einem Ausgang des Spitzenwertdetektors pd verbunden; einem zweiten Eingang der Stufe sa ist ein einstellbares Referenzsignal Sr zugeführt, das eine Amplitude der Vibration des Messrohrs 13 vorgibt. Die Stufe sa ermittelt eine Abweichung des Ausgangssignals des Spitzenwertdetektors pd vom Referenzsignal Sr.

Einem ersten Eingang eines Multiplizierers m ist das Eingangssignal des Spitzenwertdetektors pd und einem zweiten Eingang das Ausgangssignal der Stufe sa zugeführt. Der Multiplizierer m wirkt als Amplitudenmodulator. Dabei ist ein Sensorsignal bzw. die Summe der beiden Sensorsignale - bzw. ein dazu jeweils proportionales Signal, s.u. - das Trägersignal und das Ausgangssignal der Stufe sa das Modulationssignal, das - immerhin langsam - veränderlich ist; es stellt die Abweichung der momentanen Vibrationsamplitude des Messrohrs 13 von dessen durch das Referenzsignal Sr repräsentierten Soll-Vibrationsamplitude dar.

Mit einem Ausgang des Multiplizierers m ist eingangsseitig eine Endstufe ps verbunden, die ausgangsseitig die Erregeranordnung 16 speist.

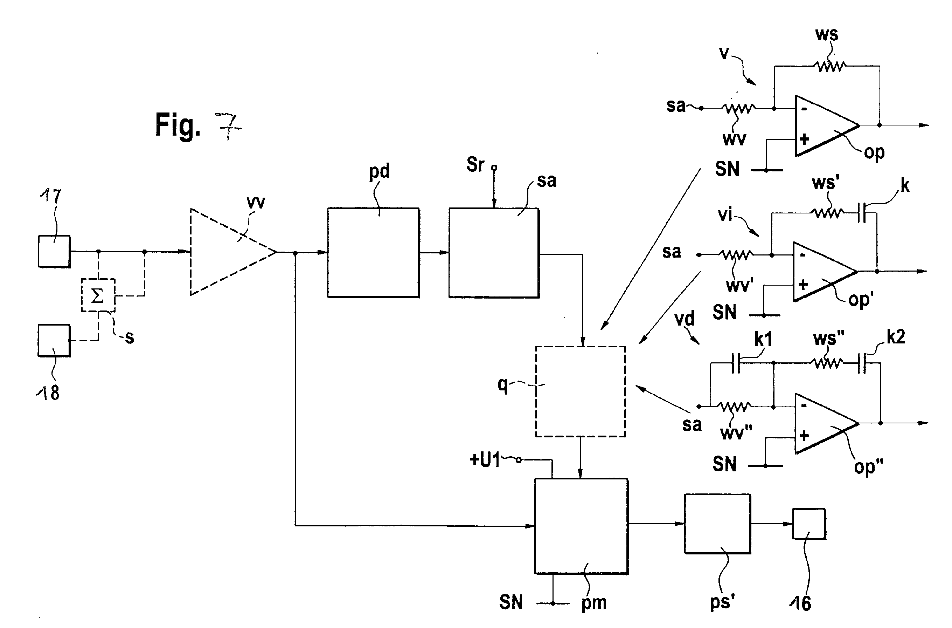

In Fig. 7 ist teilweise nach Art eines Blockschaltbilds das Schaltbild eines Ausführungsbeispiels einer zweiten bevorzugten Erregerschaltung dargestellt. Das Ausführungsbeispiel der Fig. 7 unterscheidet sich von dem der Fig. 6 dadurch, dass anstatt von deren Multiplizierer m ein Pulsdauermodulator pm vorgesehen ist; dieser ist an einer konstanten positiven ersten Gleichspannung +U1 betrieben und liegt am Schaltungsnullpunkt SN.

Einem ersten Eingang des Pulsdauermodulators pm - das ist der Trägersignal-Eingang - ist das Eingangssignal des Spitzenwertdetektors pd zugeführt. Somit ist dieser erste Eingang mit einem der Sensoren verbunden - in Fig. 7 ist das wieder der Sensor 17.

Einem zweiten Eingang des Pulsdauermodulators pm - das ist der Modulationssignal-Eingang - ist das Ausgangssignal der Stufe sa zugeführt. Der Ausgang des Pulsdauermodulators pm ist mit dem Eingang einer Endstufe ps' verbunden, die ausgangsseitig die Erregeranordnung 16 speist.

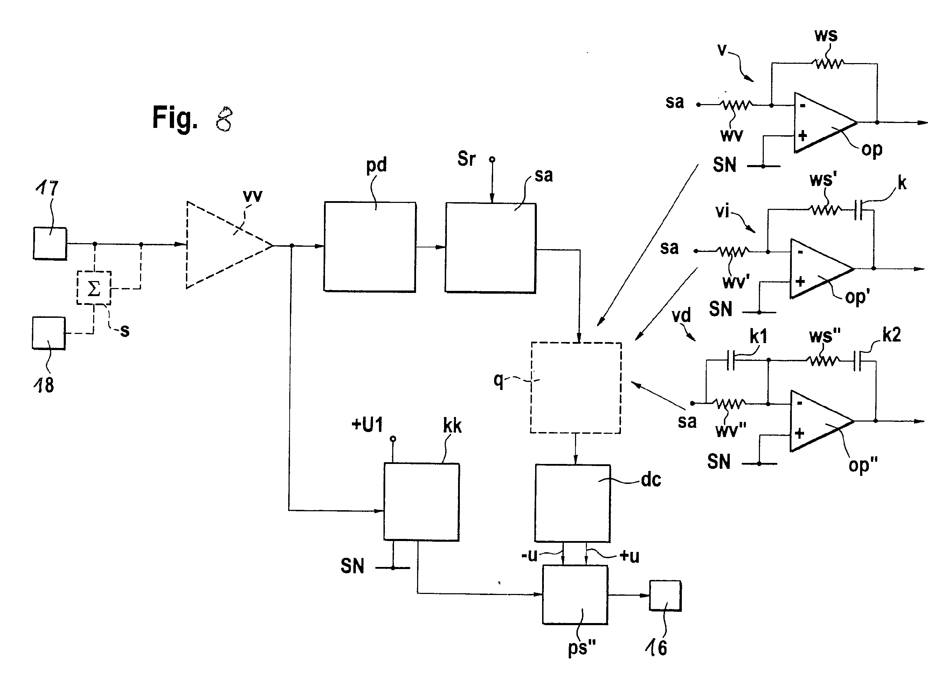

In Fig. 8 ist teilweise nach Art eines Blockschaltbilds das Schaltbild eines Ausführungsbeispiels einer dritten bevorzugten Erregerschaltung dargestellt. Das Ausführungsbeispiel der Fig. 8 unterscheidet sich von dem der Fig. 7 dadurch, dass anstatt von deren Multiplizierer m ein Komparator kk und ein Gleichspannungswandler dc vorgesehen sind, der eine positive Gleichspannung +u und eine negative Gleichspannung -u abgibt; diese Gleichspannungen sind jeweils vom Ausgangssignal der Stufe sa abhängig und daher als nicht-konstant zu betrachten. Der Komparator kk ist an der konstanten positiven ersten Gleichspannung +U1 betrieben und liegt am Schaltungsnullpunkt SN.

Einem Eingang des Komparators kk ist das Eingangssignal des Spitzenwertdetektors pd zugeführt. Somit ist der Komparator kk eingangsseitig mit einem der Sensoren verbunden - in Fig. 8 ist das wieder der Sensor 7.

Einem Steuer-Eingang des Gleichspannungswandlers dc ist das Ausgangssignal der Stufe sa zugeführt. Eine Endstufe ps" ist eingangsseitig mit dem einen Ausgang des Komparators kk verbunden, die mittels der vom Gleichspannungswandler dc erzeugten Gleichspannungen +u, -u mit Energie versorgt ist und die Erregeranordnung 16 speist.

In den Fig. 6 bis 8 ist jeweils gestrichelt angedeutet, dass anstatt eines der Sensorsignale der Sensoren 17, 18 auch deren Summe dem Spitzenwertdetektor pd und dem Multiplizierer m bzw. dem Pulsdauermodulator pm bzw. dem Komparator kk zugeführt werden kann; dann sind diese Sensorsignale über einen Summierer s zu führen.

In den Fig. 6 bis 8 sind weitere gestrichelt gezeichnete Teilschaltungen zu sehen, die bevorzugte Weiterbildungen darstellen. Eine erste solche Weiterbildung ist ein Vorverstärker vv, der dem Spitzenwertdetektor pd vorgeschaltet ist.

Eine zweite Weiterbildung ist ein Verstärker v, der das Ausgangssignal der Stufe sa verstärkt, bevor es zum Multiplizierer m gelangt. Ein solcher Verstärker kann ein Operationsverstärker op sein, dessen nicht-invertierender Eingang am Schaltungsnullpunkt SN liegt, dessen invertierender Eingang über einen Vorwiderstand wv mit dem Ausgang der Stufe sa und über einen Shuntwiderstand ws mit dem Verstärker-Ausgang verbunden ist. Der derart beschaltete Operationsverstärker op ist jeweils rechts oben in den Fig. 6 bis 8 zu sehen.

Eine dritte Weiterbildung ist ein integrierender Verstärker vi, der das Ausgangssignal der Stufe sa verstärkt und integriert, bevor es zum Multiplizierer m gelangt. Ein solcher Verstärker kann ein Operationsverstärker op' sein, dessen nicht-invertierender Eingang am Schaltungsnullpunkt SN liegt, dessen invertierender Eingang über einen Vorwiderstand wv' mit dem Ausgang der Stufe sa und über eine Serienschaltung aus einen Shuntwiderstand ws' und einem Kondensator k mit dem Verstärker-Ausgang verbunden ist. Der derart beschaltete Operationsverstärker op' ist jeweils rechts in der Mitte der Fig. 6 bis 8 zu sehen.

Eine vierte Weiterbildung ist ein differenzierender und integrierender Verstärker vd, der das Ausgangssignal der Stufe sa verstärkt, differenziert und integriert, bevor es zum Multiplizierer m gelangt. Ein solcher Verstärker kann ein Operationsverstärker op" sein, dessen nicht-invertierender Eingang am Schaltungsnullpunkt SN liegt, dessen invertierender Eingang über eine Parallelschaltung eines Vorwiderstands wv" und eines ersten Kondensators k1 mit dem Ausgang der Stufe sa und über eine Serienschaltung aus einen Shuntwiderstand ws" und einem zweiten Kondensator k2 mit dem Verstärker-Ausgang verbunden ist. Der derart beschaltete Operationsverstärker op" ist jeweils rechts unten in den Fig. 6 bis 8 zu sehen.

Mittels der Pfeile ist in den Fig. 6 bis 8 angedeutet, dass der jeweilige Verstärker v, vi, vd an die Stelle des gestrichelt gezeichneten Quadrats q zu setzen ist, das zwischen dem Ausgang der Stufe sa und dem zweiten Eingang des Multiplizieres m liegt.

Es liegt im Rahmen der Erfindung, dass die Funktionen der einzelnen Teilschaltungen der Fig. 6 bis 8 durch entsprechende analoge oder digitale Teilschaltungen realisiert werden, in letzterem Fall also z.B. mittels eines geeignet programmierten Mikroprozessors, wobei die diesem zuzuführenden Signale zuvor einer Analog/Digital-Wandlung und dessen Ausgangssignale gegebenenfalls einer Digital/Analog-Wandlung zu unterziehen sind.

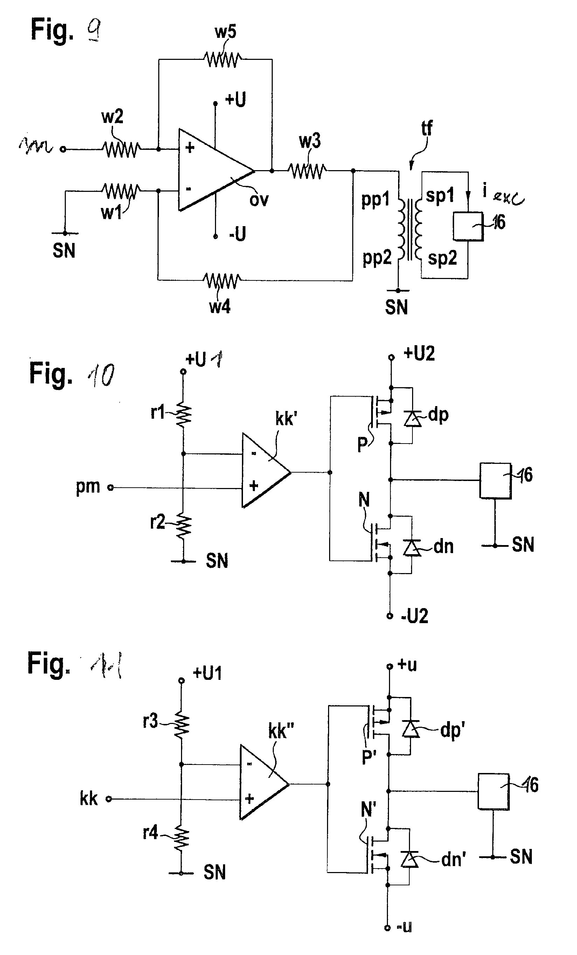

In Fig. 9 ist ein Schaltbild einer bevorzugten Endstufe der ersten Erregerschaltung nach Fig. 6 dargestellt. Ein Operationsverstärker ov ist an einer positiven und an einer negativen, jeweils konstanten Gleichspannung +U, -U betrieben und wie folgt beschaltet. Ein invertierender Eingang liegt über einen ersten Widerstand w1 am Schaltungsnullpunkt SN und ein nicht-invertierender Eingang über einen zweiten Widerstand w2 am Ausgang des Multiplizierers m.

Ein Ausgang des Operationsverstärkers ov ist unter Zwischenschaltung eines dritten Widerstands w3 mit einem ersten Pol pp1 einer Primärwicklung eines Transformators tf verbunden; ein zweiter Pol pp2 der Primärwicklung liegt am Schaltungsnullpunkt SN. Der Transformator tf hat auch eine Sekundärwicklung, die mittels ihrer beiden Pole sp1, sp2 an der Erregeranordnung 16 angeschlossen ist.

Die Primärwicklung hat eine Primärwindungszahl N1 und die Sekundärwicklung eine Sekundärwindungszahl N2. Der Transformator tf ist ein Strom-Aufwärts-Transformator und hat ein Übersetzungsverhältnis N1/N2 von z.B. 20:1.

Der invertierende Eingang des Operationsverstärkers ov ist über einen vierten Widerstand w4 am ersten Pol pp1 der Primärwicklung angeschlossen. Der nicht-invertierende Eingang des Operationsverstärkers ov ist über einen fünften Widerstand w5 mit dessen Ausgang verbunden.

Die fünf Widerstände w1, w2, w3, w4, w5 haben entsprechende Widerstandswerte R1, R2, R3, R4, R5. Der Widerstandswert R1 ist gleich dem Widerstandswert R2 und der Widerstandswert R4 ist gleich dem Widerstandswert R5 zu wählen. Der in der Erregeranordnung 16 fließende Erregerstrom $i_{exc}$ ergibt sich wie folgt, wenn die Ausgangsspannung des Multiplizierers m mit um bezeichnet ist:

$$i_{exc} = u_m \cdot \frac{R5}{R1} \cdot \frac{1}{R3} \cdot \frac{N1}{N2}$$

In Fig. 10 ist ein Schaltbild einer bevorzugten Endstufe der zweiten Erregerschaltung nach Fig. 7 dargestellt. Der "Kern" der Endstufe, die eine komplementäre Gegentakt-Endstufe ist, ist eine Serienschaltung des gesteuerten Strompfads eines P-Kanal-Enhancement-Isolierschicht-Feldeffekt-Transistors P mit einem N-Kanal-Enhancement-Isolierschicht-Feldeffekt-Transistor N, die im Folgenden kurz als Transistoren bezeichnet sind.

Am Verbindungspunkt der gesteuerten Strompfade ist die Erregeranordnung 16 angeschlossen. Jedem gesteuerten Strompfad ist eine Schutzdiode dn, dp parallelgeschaltet, wobei die jeweilige Katode am positiveren Punkt des jeweiligen Transistors liegt.

Das P-Transistor-seitige Ende der Serienschaltung liegt an einer konstanten positiven zweiten Gleichspannung +U2 und deren N-Transistor-seitiges Ende an einer entsprechenden negativen Gleichspannung -U2. Die Gates der Transistoren N, P sind miteinander und mit einem Ausgang eines Komparators kk' verbunden. Der nicht-invertierende Eingang des Komparators kk' liegt am Ausgang des Pulsdauermodulators pm, vgl. Fig. 7.

Der invertierende Eingang des Komparators kk' ist mit einem Abgriff eines Spannungsteilers verbunden, der aus einem Widerstand r1 und einem Widerstand r2 besteht. Die Widerstände r1, r2 haben die gleichen Widerstandswerte und liegen zwischen der positiven Gleichspannung +U1 und dem Schaltungsnullpunkt SN. Die Widerstände r1, r2 und der Komparator kk' dienen der Symmetrierung des Ausgangssignals des Pulsdauermodulators pm bezüglich des halben Wertes der Gleichspannung +U1.

Die Erregeranordnung 16 erhält somit bei jedem positiv gerichteten Nulldurchgang des Ausgangssignals des Sensors 17 bzw. der Summe der Ausgangssignale der Sensoren 17,18 einen positiven Stromimpuls und bei jedem negativ gerichteten Nulldurchgang des Ausgangssignals des Sensors 17 bzw. der Summe der Ausgangssignale der Sensoren 17, 18 einen negativen Stromimpuls zugeführt. Die jeweilige Dauer dieser Stromimpulse stellt sich automatisch so ein, dass die Schwingungsamplitude des Messrohrs 13 erreicht wird, die durch das Referenzsignal Sr vorgegeben ist.

In Fig. 11 ist ein Schaltbild einer bevorzugten Endstufe der dritten Erregerschaltung nach Fig. 8 dargestellt. Der "Kern" der Endstufe, die wieder eine komplementäre Gegentakt-Endstufe ist, ist auch hier wie in Fig. 10 eine Serienschaltung des gesteuerten Strompfads eines P-Kanal-Enhancementlsolierschicht-Feldeffekt-Transistors P' mit einem N-Kanal-Enhancementlsolierschicht-Feldeffekt-Transistor N', die im Folgenden wieder kurz als Transistoren bezeichnet sind.

Am Verbindungspunkt der gesteuerten Strompfade ist die Erregeranordnung 16 angeschlossen. Jedem gesteuerten Strompfad ist eine Schutzdiode dn', dp' parallelgeschaltet, wobei die jeweilige Katode am positiveren Punkt des jeweiligen Transistors liegt.

Das P-Transistor-seitige Ende der Serienschaltung liegt an der vom Ausgangssignal der Stufe sa abhängigen positiven Gleichspannung +u und deren N-Transistor-seitiges Ende an der vom Ausgangssignal der Stufe sa abhängigen negativen Gleichspannung -u. Die Gates der Transistoren N', P' sind miteinander und mit einem Ausgang eines Komparators kk" verbunden. Der nicht-invertierende Eingang des Komparators kk" liegt am Ausgang des Komparators kk, vgl. Fig. 8.

Der invertierende Eingang des Komparators kk" ist mit einem Abgriff eines Spannungsteilers verbunden, der aus einem Widerstand r3 und einem Widerstand r4 besteht. Die Widerstände r3, r4 haben die gleichen Widerstandswerte und liegen zwischen der konstanten positiven ersten Gleichspannung +U1 und dem Schaltungsnullpunkt SN. Die Widerstände r3, r4 und der Komparator kk" dienen der Symmetrierung des Ausgangssignals des Komparators kk bezüglich des halben Wertes der Gleichspannung +U1.

Die Erregeranordnung 16 erhält somit während jeder positiven Halbwelle des Ausgangssignals des Sensors 17 bzw. der Summe der Ausgangssignale der Sensoren 17, 18 einen positiven Stromimpuls und während jeder negativen Halbwelle des Ausgangssignals des Sensors 17 bzw. der Summe der Ausgangssignale der Sensoren 17, 18 einen negativen Stromimpuls zugeführt. Die jeweilige Amplitude dieser Stromimpulse ist von den vom Ausgangssignal der Stufe sa abhängigen Gleichspannungen +u, -u ihrerseits abhängig, sodass sich die durch das Referenzsignal Sr vorgegebene Schwingungsamplitude des Messrohrs 13 automatisch einstellt.

Die erwähnten Gleichspannungen +U1, +U2, -U2 werden auf der Basis der von der Zwei-Leiter-Prozesskontroll-Schleife zur Verfügung gestellten Energie in üblicher Weise erzeugt. Es ist auch möglich, anstatt der beiden positiven Gleichspannungen +U1, +U2 nur eine einzige positive Gleichspannung vorzusehen.

Die erwähnte Zweidraht-Prozesskontroll-Schleife führt beider Erfindung einerseits bevorzugt einen der Energieversorgung dienenden Gleichstrom, wobei insb. das Ausgangssignal ebenfalls ein Gleichstrom ist, der z.B. standard-gemäß einen Bereich von 4 mA bis 20 mA umfasst. Andererseits kann das Ausgangssignal auch bevorzugt ein Digitalsignal sein, sodass die Zweidraht-Prozesskontroll-Schleife an einen Feldbus angeschlossen werden kann.

Die Erregerschaltung 160 der Erfindung stellt zusammen mit dem Messrohr 13 einen Regelkreis dar, der sich elektrisch sowohl auf die mechanische Resonanzfrequenz der erregten Vibrationen des Messrohrs 13 als auch auf die mittels des Referenzsignals Sr vorgegebene Amplitude dieser Vibrationen einstellt.

Es sind daher die bisher üblichen Erregerschaltungen, die eine Amplitudenregelstufe und eine phasenverriegelte Schleife, eine sogenannte PLL, zur elektrischen Regelung der Resonanzfrequenz und der Vibrationsamplitude aufweisen, nicht erforderlich. Die bisherigen Erregerschaltungen sind nicht nur, was die Anzahl der erforderlichen Komponenten betrifft, sehr aufwendig, sondern sie benötigen auch weit mehr Versorgungsenergie, als bei Zwei-Draht-Messgeräten zur Verfügung steht.

Die Erregerschaltung 160 benötigt nur wenige Komponenten, die somit insgesamt auch nur eine praktisch vernachlässigbare Verlustleistung aufweisen, so dass die zur Verfügung stehende geringe Versorgungsenergie fast vollständig für die Erregung und die Erzeugung des Vibrationssignals nutzbar ist.

**Patentansprüche**

1. Viskositäts-Messgerät für ein in einer Rohrleitung strömendes Fluid, welches Viskositäts-Messgerät umfasst:

- einen Messaufnehmer (10) vom Vibrationstyp, insb. vom Biegeschwingungstyp,

-- mit mindestens einem mit der Rohrleitung kommunizierenden, im Betrieb vibrierenden Messrohr (13) zum Führen des Fluids und zum Erzeugen von im Fluid wirkenden Reibungskräften,

-- mit einer Erregeranordnung (16) zum Vibrierenlassen des mindestens einen Messrohrs (13) sowie

- eine einen vorgebbaren Bedarf an elektrischer Leistung aufweisende Messgerät-Elektronik (50), die

-- einen die Erregeranordnung (16) speisenden Erregerstrom ($i_{exc}$) und
-- einen eine Viskosität des Fluids momentan repräsentierenden Viskositäts-Messwert ($X_\eta$) liefert,

- wobei die Messgerät-Elektronik mit einer Zwei-Leiter-Prozesskontroll-Schleife verbunden und davon mit elektrischer Energie versorgt ist und
- wobei die Messgerät-Elektronik ein mit dem Viskositäts-Messwert korrespondierendes Viskositätssignal in die Zwei-Leiter-Prozesskontroll-Schleife einspeist.

2. Viskositäts-Messgerät nach Anspruch 1,

- bei dem der Bedarf der Messgerät-Elektronik an elektrischer Leistung variierbar ist und
- bei dem die Messgerät-Elektronik eine Steuerschaltung zum Einstellen des Bedarfs an elektrischer Leistung umfasst.

3. Viskositäts-Messgerät nach Anspruch 2, bei dem die Messgerät-Elektronik umfasst:

- eine Erregerschaltung zum Erzeugen des Erregerstroms und
- eine Auswerteschaltung zum Erfassen des Sensorsignals und Ermitteln des Viskositäts-Messwerts, wobei
- die Steuerschaltung die Erregerschaltung und/oder die Auswerteschaltung zum Absenken des Bedarfs an elektrischer Leistung zeitweise deaktiviert.

4. Viskositäts-Messgerät nach Anspruch 2 oder 3, bei dem die Messgerät-Elektronik einen an die Zwei-Leiter-Prozesskontroll-Schleife gekoppelten Energiepuffer enthält, der die von der Messgerät-Elektronik benötigte Leistung mindestens teilweise und/oder mindestens zeitweise bereitstellt.

5. Viskositäts-Messgerät nach Anspruch 4, bei dem die Steuerschaltung ein zeitweises Laden des Energiepuffers veranlasst.

6. Viskositäts-Messgerät nach einem der Ansprüche 1 bis 5, das mittels der Zweidraht-Prozesskontroll-Schleife an einem Feldbus angeschlossen ist.

7. Viskositäts-Messgerät nach einem der Ansprüche 1 bis 6, bei dem die Zweidraht-Prozesskontroll-Schleife einen Gleichstrom führt.

8. Viskositäts-Messgerät nach Anspruch 7, bei dem das Viskositätssignal ein veränderlicher Gleichstrom ist.

9. Viskositäts-Messgerät nach Anspruch 8, bei dem das Ausgangsignal einen Bereich von 4 mA bis 20 mA umfasst.

10. Viskositäts-Messgerät nach einem der Ansprüche 1 bis 5, bei dem das Ausgangsignal ein Digitalsignal ist.

11. Viskositäts-Messgerät nach einem der Ansprüche 1 bis 10, bei dem der Messaufnehmer eine Sensoranordnung (60) zum Erfassen von Vibrationen des Messrohrs (13) und zum Erzeugen von mindestens einem diese repräsentierenden Sensorsignal (s1) aufweist.

12. Viskositäts-Messgerät nach Anspruch 11, bei dem die Messgerät-Elektronik (50) den Erregerstrom ($i_{exc}$) mittels des mindestens einen Sensorsignals (s1) einstellt.

13. Viskositäts-Messgerät nach einem der Ansprüche 3 bis 12, bei dem die Erregerschaltung umfasst:

- einen Spitzenwertdetektor (pd), dem als Eingangsignal das Sensorsignal zugeführt ist,
- eine Stufe (sa), die eine Abweichung eines Ausgangssignal des Spitzenwertdetektors von einem einstellbaren Referenzsignal (Sr) ermittelt, das eine Amplitude der Vibration des Messrohrs vorgibt,
- einen Multiplizierer (m) für das Eingangsignal des Spitzenwertdetektors (pd) und ein Ausgangssignal der Stufe (sa) sowie
- eine die Erregeranordnung speisende Endstufe (ps), von der ein Eingang mit einem Ausgang des Multiplizierers verbunden ist.

14. Viskositäts-Messgerät nach Anspruch 13, bei der die Endstufe (ps) umfasst:

- einen Operationsverstärker (ov), der wie folgt beschaltet ist:

-- ein invertierender Eingang liegt über einen ersten Widerstand (w1) an einem Schaltungsnullpunkt (SN),
-- ein nicht-invertierender Eingang liegt über einen zweiten Widerstand (w2), der den gleichen Widerstandswert wie der erste Widerstand hat, am Ausgang des Multiplizierers (m),
-- ein Ausgang ist unter Zwischenschaltung eines dritten Widerstands (w3) mit einem ersten Pol (pp1) einer Primärwicklung eines Transformators (tf) verbunden, von der ein zweiter Pol (pp2) am Schaltungsnullpunkt (SN) liegt, welcher Transformator

--- eine mit der elektromechanischen Erregeranordnung (6) verbundene Sekundärwicklung aufweist und

--- ein Strom-Aufwärts-Transformator ist,

-- der invertierende Eingang ist über einen vierten Widerstand (w4) mit dem Ausgang verbunden, und

-- der nicht-invertierende Eingang ist über einen fünften Widerstand (w5), der den gleichen Widerstandswert wie der vierte Widerstand hat, am ersten Pol (pp1) der Primärwicklung angeschlossen.

15. Viskositäts-Messgerät nach einem der Ansprüche 3 bis 12, bei dem die Erregerschaltung umfasst:

- einen Spitzenwertdetektor (pd), dem als Eingangssignal eines der Sensorsignale bzw. deren Summe zugeführt ist,

- eine Stufe (sa), die eine Abweichung eines Ausgangssignal des Spitzenwertdetektors von einem einstellbaren Referenzsignal (Sr) ermittelt, das eine Amplitude der Vibration des Messrohrs vorgibt,

- einen Pulsdauermodulator (pm), von dem

-- einem ersten Eingang das Eingangssignal des Spitzenwertdetektors (pm) und einem zweiten Eingang ein Ausgangssignal der Stufe (sa) zugeführt sind, sowie

- eine die Erregeranordnung (6) speisende Endstufe (ps'), von der ein Eingang mit einem Ausgang des Pulsdauermodulators (pd) verbunden ist.

16. Viskositäts-Messgerät nach Anspruch 15, bei der die Endstufe eine komplementäre Gegentakt-Endstufe umfasst, die von einer konstanten positiven und einer konstanten negativen Gleichspannung (+U2, -U2) mit Energie versorgt ist.

17. Viskositäts-Messgerät nach einem der Ansprüche 3 bis 12, bei dem die Erregerschaltung umfasst:

- einen Spitzenwertdetektor (pd), dem als Eingangssignal eines der Sensorsignale bzw. deren Summe zugeführt ist,

- eine Stufe (sa), die eine Abweichung eines Ausgangssignal des Spitzenwertdetektors von einem einstellbaren Referenzsignal (Sr) ermittelt, das eine Amplitude der Vibration des Messrohrs vorgibt,

- einen eingangsseitig mit einem Ausgang der Stufe (sa) verbundenen Gleichspannungswandler (dc), der eine positive und eine negative, jeweils vom Ausgangssignal der Stufe abhängige Gleichspannung (+u, -u) abgibt,

- einen eingangsseitig mit dem Eingangssignal des Spitzenwertdetektors (pd) gespeisten Komparator (kk) und

- eine die Erregeranordnung (6) speisende Endstufe (ps"), von der ein Eingang mit einem Ausgang des Komparators verbunden ist und die von den vom Ausgangssignal der Stufe abhängigen Gleichspannungen (+u, -u) mit Energie versorgt ist.

18. Viskositäts-Messgerät nach Anspruch 17, bei der die Endstufe eine komplementäre Gegentakt-Endstufe umfasst, die von der vom Ausgangssignal der Stufe (sa) abhängigen positiven und der entsprechenden negativen Gleichspannung (+u, -u) mit Energie versorgt ist.

19. Viskositäts-Messgerät nach einem der Ansprüche 13, 15 oder 17, bei der dem Spitzenwertdetektor (pd) ein Vorverstärker (vv) vorgeschaltet ist.

20. Viskositäts-Messgerät nach einem der Ansprüche 13, 15 oder 17, bei der das Ausgangssignal der Stufe (sa) über einen Verstärker (v), über einen integrierenden Verstärker (vi) oder über einen differenzierenden und integrierenden Verstärker (vd) dem Multiplizierer (m) bzw. dem Pulsdauermodulator (pm) bzw. dem Gleichspannungswandler (dc) zugeführt ist.

Fig. 1

Fig. 2

10

13

223

25

34

24

27

16

213

13A

Fig. 3

Fig. 4

FIG. 5

EP 1 296 128 A1

# Fig. 6

EP 1 296 128 A1

**Fig. 7**

EP 1 296 128 A1

Fig. 8

EP 1 296 128 A1

**Fig. 9**

**Fig. 10**

**Fig. 11**

**Europäisches Patentamt**

# EUROPÄISCHER RECHERCHENBERICHT

Nummer der Anmeldung

EP 01 12 5775

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y,D | US 4 524 610 A (FITZGERALD J VINCENT ET AL) 25. Juni 1985 (1985-06-25) | 1-4 | G01N11/16 G08C19/16 |
| A | * das ganze Dokument * | 5-20 | |
| Y | DE 27 01 184 A (ENDRESS HAUSER GMBH CO) 27. Juli 1978 (1978-07-27) | 1-4 | |
| A | * Seite 4, Zeile 1 - Seite 9, Zeile 6 * * Seite 12, Zeile 1, Absatz 1 - Seite 12, Zeile 1, Absatz 14; Abbildung 4 * | 5-20 | |
| A | US 4 420 753 A (MEYER-EBRECHT DIETRICH) 13. Dezember 1983 (1983-12-13) * das ganze Dokument * | 1-20 | |
| A,P | EP 1 154 254 A (FLOWTEC AG) 14. November 2001 (2001-11-14) * das ganze Dokument * | 1-20 | |
| A | US 5 907 292 A (AHR ROBERT) 25. Mai 1999 (1999-05-25) * Anspruch 1 * | 1-20 | RECHERCHIERTE SACHGEBIETE (Int.Cl.7) G01N G08C |

Der vorliegende Recherchenbericht wurde für alle Patentansprüche erstellt

| Recherchenort | Abschlußdatum der Recherche | Prüfer |
|---|---|---|
| MÜNCHEN | 7. Dezember 2001 | Thomte, M |

## ANHANG ZUM EUROPÄISCHEN RECHERCHENBERICHT
## ÜBER DIE EUROPÄISCHE PATENTANMELDUNG NR.

EP 01 12 5775

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-12-2001

| Im Recherchenbericht angeführtes Patentdokument | | Datum der Veröffentlichung | Mitglied(er) der Patentfamilie | | Datum der Veröffentlichung |
|---|---|---|---|---|---|
| US 4524610 | A | 25-06-1985 | KEINE | | |
| DE 2701184 | A | 27-07-1978 | DE | 2701184 A1 | 27-07-1978 |
| | | | CH | 617783 A5 | 13-06-1980 |
| | | | FR | 2377611 A1 | 11-08-1978 |
| | | | IT | 1088944 B | 10-06-1985 |
| | | | JP | 53105110 A | 13-09-1978 |
| | | | NL | 7800234 A | 17-07-1978 |
| | | | SE | 7800329 A | 14-07-1978 |
| US 4420753 | A | 13-12-1983 | DE | 2445337 A1 | 08-04-1976 |
| | | | FR | 2285667 A1 | 16-04-1976 |
| | | | GB | 1527361 A | 04-10-1978 |
| | | | IT | 1047523 B | 20-10-1980 |
| | | | JP | 1256387 C | 12-03-1985 |
| | | | JP | 51058363 A | 21-05-1976 |
| | | | JP | 59026080 B | 23-06-1984 |
| | | | SE | 399976 B | 06-03-1978 |
| | | | SE | 7510487 A | 24-03-1976 |
| EP 1154254 | A | 14-11-2001 | EP | 1154254 A1 | 14-11-2001 |
| | | | EP | 1158289 A1 | 28-11-2001 |
| | | | US | 2001039829 A1 | 15-11-2001 |
| US 5907292 | A | 25-05-1999 | AT | 180085 T | 15-05-1999 |
| | | | CA | 2209208 A1 | 28-12-1997 |
| | | | DE | 59700161 D1 | 17-06-1999 |
| | | | DK | 817149 T3 | 15-11-1999 |
| | | | EP | 0817149 A1 | 07-01-1998 |
| | | | ES | 2134046 T3 | 16-09-1999 |

EPO FORM P0461

Für nähere Einzelheiten zu diesem Anhang : siehe Amtsblatt des Europäischen Patentamts, Nr. 12/82